# EUROPEAN PATENT APPLICATION

(11) **EP 1 202 162 A1**
(43) Date of publication of application: **02.05.2002**
(21) Application number: 01308817.4
(22) Date of filing: 17.10.2001
(51) Int. Cl.: G06F 3/14

(54) **Variable size multi-pane display for portable computer with automatic partition of input video signal**

(30) Priority: 24.10.2000 US 694473
(71) Applicant: Hewlett-Packard Company, Palo Alto, CA 94304 (US)
(72) Inventor: Nauka, Krzysztof, Redwood City, California 94062 (US)
(74) Representative: Jehan, Robert

(57) **Abstract**

A computer display system is disclosed for allowing a video image to be displayed on different sizes of displays (100) by connecting adjacent flat panel displays (FPDs) (110) to form the display (100) and by splitting the video image among the connected panel displays (110). The system may use a single panel (110) for displaying the image on a small display (100) or it may use multiple panels (110) to create a larger display (100). The system is flexible by allowing the user to vary the size of the display (100). When using multiple panels (110), the system positions the panels (110) adjacent to each other to minimise the space between panels (110) such that the display (100) appears substantially continuous from one panel (110) to another. The system may have a support structure (20) for holding the display panels (110) in place using suitable connectors (22, 24). The support structure (20) may be a rigid lattice formed from a plurality of horizontal and vertical support members (22, 24). The members may electrically connect the panels to each other and to a video controller (60) for transmitting a video image to the display (100). The support lattice (20) or the panels (110) may have a signal receiver (50), such as an external plug or a wireless port, that receives the processed video signal and sends it to the panels (110). The system may also have a support stand (40) for holding the lattice with the attached panels (110) upright for viewing.

## Description

The present invention relates generally to computer and video displays. More particularly, it relates to a system for a variable size display for portable computers.

In the field of portable computer design, display elements present significant design problems. On one hand, the display should be small enough so that the portable computer remains small, compact, and lightweight. The displays may be used with laptop or palm-sized computers that require the entire system to have a minimal size and weight for easy portability. On the other hand, a small display is difficult for the user to view. In particular, small displays make it difficult for the user to take advantage of graphics-intensive programs and applications, such as Internet access. As computers become smaller and have a smaller "footprint", a limiting factor is the display size, because a larger display is desirable. At times, a user of a portable computer may have sufficient room to set up a larger screen and may want the benefits that a larger viewing area provides. For example a business traveller may want the convenience of a small computer and screen while in transit but may want a larger viewing area upon reaching a destination, such as a hotel or conference room. Existing portable computers require the use of the attached small screen or a very large, full sized monitor that is not portable and is not convenient to take on a business trip.

The present invention seeks to provide a suitable display screen for such uses.

According to an aspect of the present invention, there is provided a computer display screen as specified in claim 1.

According to another aspect of the present invention, there is provided a flat panel display as specified in claim 7.

The preferred embodiment provides a variable-sized display that the user can change depending upon need. In particular, the user can keep the display small when used for "palm-sized" and similar applications such as taking notes or working on a spreadsheet, but that also can be made larger when the user needs to view graphics-rich web data or digital video, for example.

The preferred computer display system allows a video image to be displayed on different sizes of displays by connecting adjacent flat panel displays (FPDs) to form the display and by splitting the video image among the connected panel displays. The system may use a single panel for displaying the image on a small display or it may use multiple panels to create a larger display. The system is flexible by allowing the user to vary the size of the display. When using multiple panels, the system positions the panels adjacent each other to minimise the space between panels such that the display appears substantially continuous from one panel to another. The system may have a support structure for holding the display panels in place using suitable connectors. The support structure may be a rigid lattice formed from a plurality of horizontal and vertical support members. The members may electrically connect the panels to each other and to a video controller for transmitting a video image to the display. The support lattice or the panels may have a signal receiver, such as an external plug or a wireless port, that receives the processed video signal and sends it to the panels. The system may also have a support stand for holding the lattice with the attached panels upright for viewing.

Embodiments of the present invention are described below, by way of example only, with reference to the accompanying drawings, in which:
Figure 1 shows a perspective view of one embodiment of system in a form having multiple, interconnected panels;
Figure 2 shows a perspective view of a vertical member of the system of Figure 1;
Figure 3 shows a perspective view of a horizontal member of the system of Figure 1;
Figure 4 shows a sectional view taken along line 4-4' in Figure 3;
Figure 5 shows horizontal and vertical members as assembled in one embodiment;
Figure 6 shows an end view of the embodiment shown in Figure 1;
Figure 7 shows one embodiment of the positioning of the panes onto the support elements;
Figure 8a shows an embodiment of display screen using a single pane;
Figure 8b shows a display screen using twenty-five interconnected panes;
Figure 9 shows the disassembly of an embodiment of the display having multiple panes;
Figure 10 shows a perspective view of one embodiment of a display panel;
Figure 11 shows a sectional view of the panel of Figure 10;
Figure 12 shows a different sectional view of the panel of Figure 10; and
Figure 13 is a flow chart of a method used by a controller to provide a video signal to the display.

The preferred embodiment provides a variable-sized, multi-pane display for mobile computing which allows the user to use a single, small pane for viewing certain applications and also allows the user to add additional panes to view a larger surface area when needed. Displays of any size can easily be assembled and disassembled as required.

The display offers the flexibility of changing the display size and its aspect ratio as needed. This offers an advantage not only for portable computing but also for applications requiring a combination of desktop computing, graphics-rich web access, live images, and the like. In one use, a single original display panel may be used and attached to a portable computing device such as a personal digital assistant (PDA), a laptop computer, a palm-sized device and so on. In another use, additional display modules may be attached to the original display to create a larger viewing area for the portable computing device.

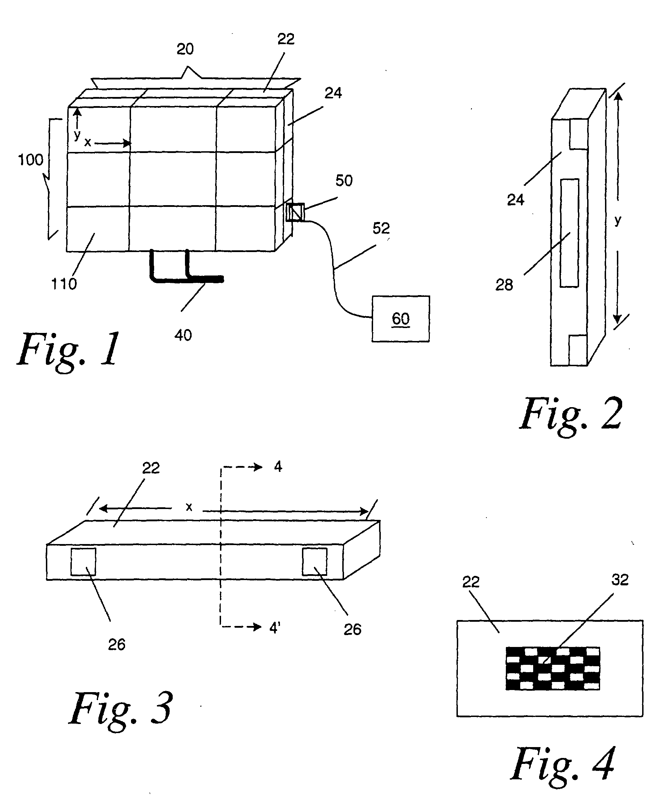

Figure 1 shows one embodiment of system. In this embodiment, a display 100 is formed from a plurality of adjacent panes 110, such as flat panel displays (FPDs) 110. The display 100 uses horizontal and vertical support elements 22, 24 that are interconnected. The horizontal and support elements 22, 24 may be generally elongated members having lengthwise dimensions given by X and Y, respectively. Horizontal and vertical support members 22, 24 connect with each other at their ends forming a grid or lattice 20 of a desired size. FPD panels 110 connect to the horizontal and vertical support members 22, 24 and have approximate dimensions of X and Y. At least one of the support members may also have an external plug 50 or other port or connector 50 for connecting a CPU 60 on which the display 100 is running to the individual FPD panels 110 using a connector 52. When multiple FPD panels 110 are connected, the system may use a support stand 40 for holding the grid 20 with the display 100 at the desired angle and height for a user. The support stand 40 may be adjustable to accommodate different display sizes.

The horizontal and vertical support members 22, 24 may use snaps or bolts-and-nuts-type connectors or other suitable connectors 28 to interconnect and form a rigid lattice grid 20. The dimensions of the grid 20 will then be given by NX* NY, where N equals 1, 2, 3, 4, etc., as the number of horizontal and vertical FPD panels 110 running lengthwise and vertically. The rigid lattice 20 then supports the FPD panes 110 as necessary. Connectors 26 on the rigid support members 22, 24 may also provide electrical contacts 26 with the wiring 32 inside the support members 22, 24. In one embodiment, the support members 22, 24 are interchangeable, whereby a horizontal bar 22 may be used as a top horizontal bar 22 or as one of the middle bars 22 or bottom bar 22. Similarly, any vertical bar 24 may be used as the left-most middle, or right-most bar. In addition, bars 22, 24 may have surface mount connectors 28 used to mount the FPD units 110 and provide electrical connection between the FPD units 110 and the electrical wiring 32 inside the bars 22, 24. At least one bar 22, 24 has an external plug 50 to provide connection with the external controller 60. In addition, the rigid bar lattice 20 may have a mountable mechanical support stand 40 that allows placing it at a desired adjustable length with respect to the viewer.

The FPD units 110 have lengths roughly equal to X and Y respectively for the horizontal and vertical bars. Their ratio conforms to the X/Y dimensions. FPD panels 110 may be small, relatively inexpensive, off-the-shelf elements such as those currently manufactured by Samsung, NEC Corp., Matsushita Electric Industrial Co Ltd., Mitsubishi Electric Corp., Display Technology Inc., and others, that can be electrically connected to the bar lattice 20 described above, using the connectors 28. By adding multiple display panes 110, a flat panel display area 100 can vary from very small (N equals 1) to a very large (N equals large) area. The FPD panes 110 may be mounted on the rigid lattice 20 50 as to minimise breaks between adjacent panes 110.

Figures 2 and 3 show the vertical and horizontal support members 24, 22 in greater detail. The vertical member 24 has a length Y, which may be roughly equal to the vertical dimension of an FPD panel 110. The member 24 has a fastener, snap, or other suitable connector 28 for connecting to an FPD panel 110. The horizontal member 22 has a length X, which may be roughly equal to the horizontal dimension of an FPD panel 110. The horizontal and vertical members connect to each other at their respective ends in one embodiment. The horizontal member 22, vertical member 24, or both may have electrical connections 32 contained therein. These connections 32 are used to provide the video signal to the display 100.

Figure 4 shows a cross-section of the horizontal member 22 shown in Figure 3 having electrical connections 32 running lengthwise through the member 22. The horizontal or vertical member 22, 24 connects the electrical connections 32 to the FPD panels 110 and to the external plug 50 or other connector 50 to the CPU 60 or other external controller 60. The panels may be powered by suitable power source (not shown), including but not limited to a battery, a DC source, or an AC source with a suitable transformer. The power source may be located internally to the FPD panels 110, or it may be external. The electrical connections 32 may carry power to the panels 110 as needed, or the power may be provided by an independent connection.

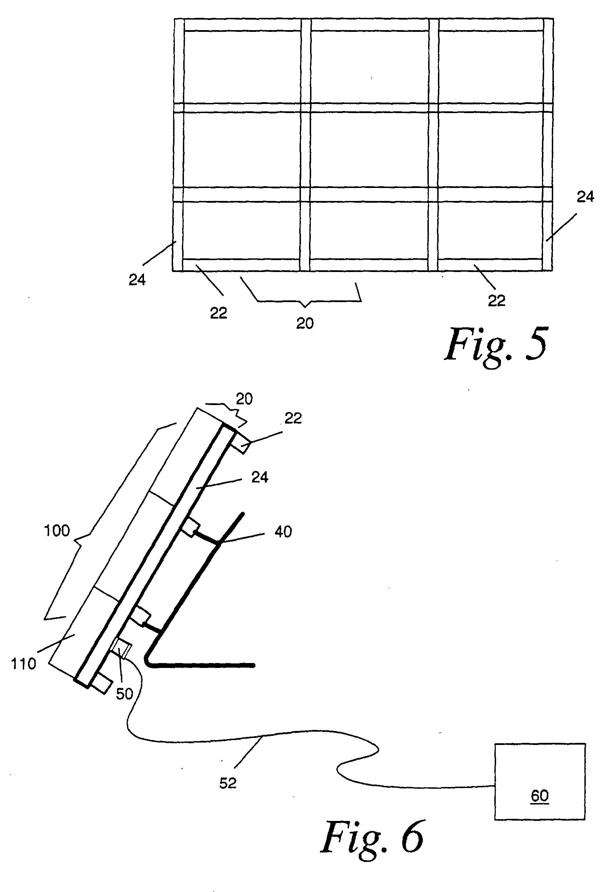

Figure 5 shows a support grid 20 formed from interconnected horizontal and vertical support members 22, 24. The support members 22, 24 are connected at their respective ends. In the embodiment shown, the support grid 20 is assembled for accepting a display 100 having nine FPD panels 110. The panels 110 may be positioned such that the overall horizontal and vertical dimensions of the display 100 are proportional to the dimensions of an individual panel 110, such that the video image is not distorted. If panels 110 of equal size are used, then the system may be symmetric, in that it has the same number of vertical and horizontal panels 110. That is, a nine-panel display 100 would have three columns and three rows of panels 110.

Alternatively, in one embodiment, the system may use an asymmetric arrangement of panels and may distort the video image, if desired, or it may display the image only on some of the panels 110, and might display the same image or a different image on other panels 110, and might display the same image or a different image on other panels 110.

Figure 6 shows an assembled display 100 having nine FPD panels 110 supported by a support grid 20. The support grid 20 is formed from horizontal and vertical support members 22, 24. An external plug 50 is used as the receiver 50, and connects the grid 20 to an external controller or CPU 60 using a connector 52, such as a cable. In the embodiment shown, a support stand 40 holds the display 100 and grid 20 upright for a user to view.

The system may also use an image controller as part of the display 100 or residing within the external controller 60 as shown in Figures 1 and 6. The image controller 60 may be connected to the receiver 50 of the display 100 using a cable 52, as shown in Figures 1 and 6, or it may be wireless (for example using an IR link, a radio frequency link, a microwave link, etc.). If the system is wireless, then the receiver 50 would be a suitable port, such as an IR port or receiver. The image controller 60 senses the number of interconnected panes 110 attached to the rigid lattice 20. The controller 60 then processes the incoming video signal and partitions the displayed signal among each of the interconnected FPD panes 110. The controller 60 may be controlled using similar software to that utilised currently in tube-type devices, such as those involving multiple television sets. Such software is commercially available, such as that manufactured by Pixelvision Technology, Inc., which can be found at http://www.pixelvision.com. One skilled in the art will recognise that the conventional software may be tailored for specific implementations of the system.

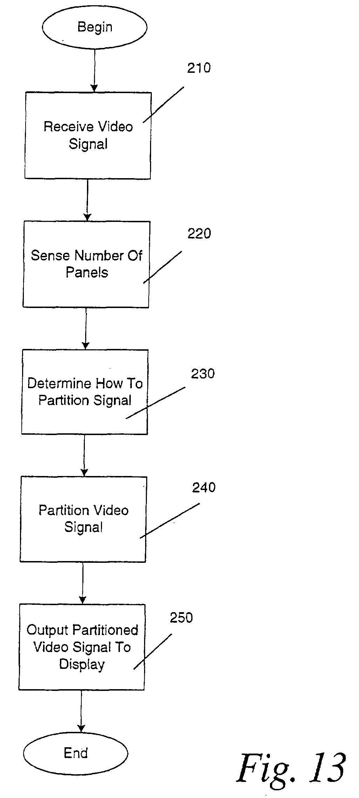

Figure 13 shows a flow chart of the method used by the controller 60. The controller 60 receives a video signal (step 210). It senses the number of panels in the display (step 220). Based on the number of panels, it determines how to partition the signal for display among the panels (step 230). As part of the step of determining how to partition the signal, the controller 60 also determines whether to maintain the aspect ratio of the signal or, alternatively, allow the aspect ratio to possibly become distorted among the panels. Based on these determinations, the controller 60 partitions the signal (step 240), and outputs the partitioned video signal to the individual display panels (step 250). The steps in the flow chart of Figure 13 can be implemented, for example, with the conventional software identified above.

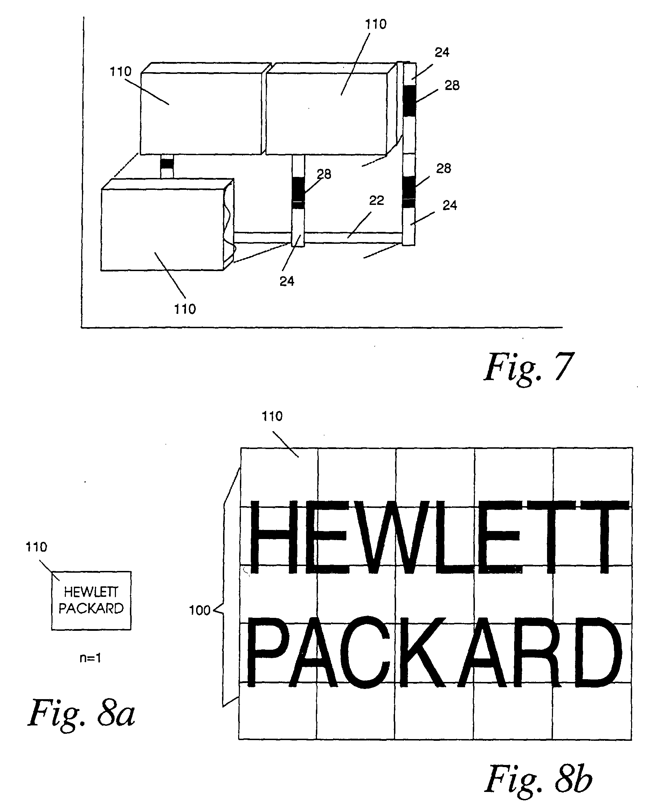

Figure 7 shows the attachment of the FPD panels 110 to the support grid 20. Once the support grid 20 is assembled, the individual panels 110 may be "snapped" into, or otherwise attached to, connectors 28 on the grid 20.

Figures 8a and 8b show the system in use, displaying the text "Hewlett Packard". Figure 8a shows how the display 100 may use a single pane 110 where a smaller display is desired. Figure 8b shows the display 100 using twenty-five panes 110. The same text is displayed across the entire display 100 in each application.

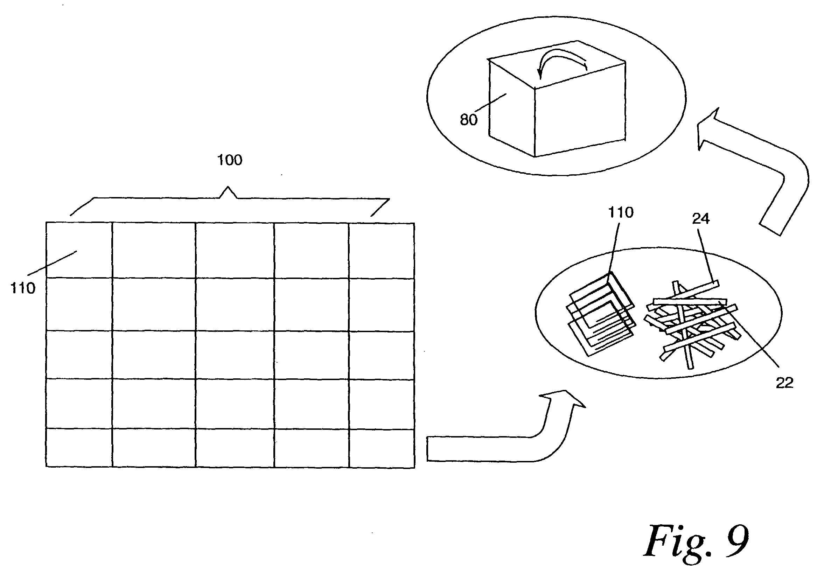

Figure 9 shows how the display may be disassembled for transport or storage. The display 100 is taken apart into individual panes 110, which may stack for efficient storage. Likewise, the horizontal and vertical support members 22, 24 may be removed from the grid 20. The pieces may be placed in a suitable carrier 80 for transportation or storage.

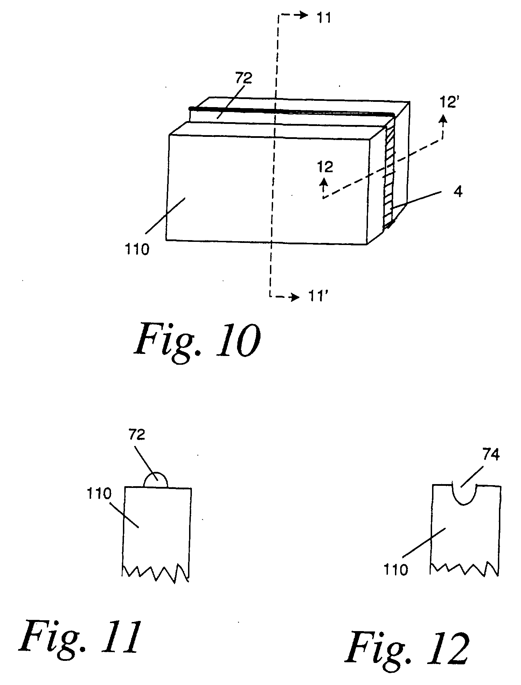

In another embodiment, rigid support members may not be used but, instead, the FPD panels 110 may support themselves. The individual FPD panels 110 may be adapted to interconnect with each other and to connect to an external controller. Figure 10 shows such an embodiment in which the FPD panels 110 are rigid and have male and female connectors that allow the individual panels 110 to connect to each other. By way of example, each panel 110 may have a protruding flange 72 that mechanically and electrically connects to an adjacent panel 110 to provide a rigid support and an electrical connection to the display 100. The flange 72 may attach to a reciprocal connector, such as the receiving trough 74 shown. Figure 11 shows a cross-section of Figure 10 illustrating a connecting flange protruding from an end of a panel 110. Figure 12 shows a cross-section of Figure 10 illustrating a trough 74 in an end of a panel 110.

Another advantage of the display comes from the fact that it may be created using off-the-shelf components. A display pane may be a small-sized FPD unit. Mechanical support elements and logic circuits needed to control the image are easily achievable using off-the-shelf components. Also, software solutions needed to manipulate the image are either commercially available, or may be adapted from existing systems.

Still another advantage is that a cost savings may be realised by utilising the display. One problem associated with using larger FPD units is that the expense of the FPD unit increases substantially with its size. Larger sizes of FPD units are not available or are very expensive if they are available. Combining multiple display panels may be less expensive than using a single large display panel.

The disclosures in United States patent application no. 09/694,473, from which this application claims priority, and in the abstract accompanying this application are incorporated herein by reference.

## Claims

1. A computer display system for allowing varying sizes of a viewing area including:
a display (100) having a variable number of interconnectable panels (110), said panels (110) being capable of being used with a portable computer; and
a video controller (60) operable to receive a video signal, to determine how many panels (110) are used in the display (100), and to partition the signal among the panels (110).

2. A system as in claim 1, including a support structure (20) connected to the display (100), said support structure (20) comprising a plurality of rigid, interconnected support members (22, 24) wherein at least one of the support members (22, 24) has an electrical connector (32) for carrying a video signal to the display (100) and wherein at least one member (22, 24) has an electrical contact (26) connectable to at least one display panel (110) for sending the signal to the display panel (110).

3. A system as in claim 1 or 2, wherein at least one of the support members (22, 24) has a signal receiver (50) for receiving the signal sent by the video controller (60) and for sending the signal to the electrical connector (32), wherein the signal receiver (50) is an external plug attached to a cable (52), which cable (52) is usable to transmit the signal to the receiver (50), or wherein the signal receiver (50) is a wireless port for receiving an infrared, a radio frequency or a microwave frequency signal.

4. A system as in any preceding claim, wherein the panels (110) are rigid and have a connector portion (72) for mechanically connecting a first display panel (110) to an adjacent second display panel (110).

5. A system as in any preceding claim, wherein the system is adapted for use with a portable computer.

6. A system as in any preceding claim, wherein the video controller (60) is operable to maintain an aspect ratio of the video signal to avoid distorting an image created by the signal.

7. A flat panel display (110) capable of connecting to other flat panel displays (110) for displaying a single image over multiple displays, including:
a first display portion;
a plurality of sides connected to the display portion;
an electrical portion operable to send a video signal to the display portion, wherein the sides are designed for abutting a side of a second panel display, whereby an image may be displayed substantially continuously across the first display portion and a second display portion of the second panel display (110).

8. A display as in claim 7, wherein the panel display (110) is designed to connect to a rigid support structure (20), wherein the electrical portion is designed to receive a signal from electrical connections (32) in the support structure (20).

9. A display as in claim 7 or 8, wherein the sides are designed mechanically and electrically to connect to an adjacent panel display (110), wherein the electrical portion is designed electrically to connect to the electrical portion of an adjacent panel display (110).

10. A display as in any one of claims 7 to 9, wherein the electrical portion is operable to receive the video signal from a video controller that partitions the video signal among a number of interconnected panel displays (110).
